# EUROPEAN PATENT APPLICATION

(11) **EP 3 104 384 A1**
(43) Date of publication of application: **14.12.2016**
(21) Application number: 15745750.8
(22) Date of filing: 29.01.2015
(51) Int. Cl.: H01G 11/78, H01G 11/74, H01G 11/76, H01M 2/02, H01M 2/04, H01M 2/26, H01M 10/04

(54) **POWER STORAGE DEVICE**

(30) Priority: 05.02.2014 JP 2014020668
(71) Applicant: Sumitomo Electric Industries, Ltd., Osaka-shi, Osaka 541-0041 (JP)
(72) Inventor: MAJIMA, Masatoshi, Itami-shi Hyogo 664-0016 (JP); YUGAHARA, Kaoru, Itami-shi Hyogo 664-0016 (JP); UEDA, Mitsuyasu, Itami-shi Hyogo 664-0016 (JP)
(74) Representative: Boult Wade Tennant
(86) International application number: PCT/JP2015/052439
(87) International publication number: WO 2015/119027

(57) **Abstract**

In an electricity storage device, a case 1 in which an electrode group is accommodated includes a first main wall 11 and a second main wall 12 that face each other, a first side wall 13 and a second side wall 14 through which the first main wall 11 and the second main wall 12 are coupled with each other at both sides of the first main wall 11 and the second main wall 12, a top wall 15 on which an external terminal is disposed, and a bottom wall 16. The electrode group is accommodated in the case 1 while both end surfaces of the electrode group in a stacking direction of positive electrode plates and negative electrode plates face an inner surface of the first main wall 11 and an inner surface of the second main wall 12. A plurality of positive electrode tabs disposed on the plurality of positive electrode plates at a position close to the first side wall 13 and a plurality of negative electrode tabs disposed on the plurality of negative electrode plates at a position close to the second side wall 14 protrude from an end surface of the electrode group in a direction toward the top wall 15. The top wall 15 of the case 1 has a recess 17 depressed to a position between the positive electrode tabs and the negative electrode tabs.

## Description

### Technical Field

The present invention relates to electricity storage devices such as lithium ion capacitors and lithium ion batteries.

### Background Art

In recent years, techniques for converting renewable energy that uses sunlight, wind, and the like as energy sources into electric energy have received attention. With advance of such techniques, electricity storage devices for storing electric energy have been actively developed. Known examples of the electricity storage devices include lithium ion secondary batteries and electric double layer capacitors. To further increase the capacity, electric double layer capacitors have been developed. In such electricity storage devices, an improvement in volumetric energy density is desired in addition to the increase in capacity.

Many of the electricity storage devices include an electrode group obtained by alternately stacking a plurality of positive electrode plates and a plurality of negative electrode plates with separators disposed therebetween, a case in which the electrode group is accommodated, and an external terminal disposed on the case and electrically connected to the electrode group. In the related art, the case includes a cylindrical exterior can having a closed bottom and a flat sealing plate that seals an opening of the exterior can, and almost all the cases have a rectangular shape (e.g., refer to PTL 1). The electrode group is accommodated in such a case. Furthermore, the external terminal is disposed on the sealing plate.

### Citation List

### Patent Literature

PTL 1: Japanese Unexamined Patent Application Publication No. 2011-204469

### Summary of Invention Technical Problem

In the above-described electricity storage device, positive electrode tabs disposed on the positive electrode plates and negative electrode tabs disposed on the negative electrode plates protrude from an end surface of the electrode group in a direction toward the sealing plate. The electrode group and the external terminal are electrically connected to each other through the tabs. Therefore, the case needs to have not only a space in which the electrode group is accommodated, but also a space in which the positive electrode tabs and the negative electrode tabs are accommodated. Thus, in rectangular electricity storage devices including a case having a rectangular shape, the occupation ratio of the electrode group is at most about 85 to 90%, and there is a limitation on an improvement in the occupation ratio. Consequently, the volumetric energy density determined on the basis of the outer dimensions of electricity storage devices is much lower than the volumetric energy density of the electrode group.

Accordingly, it is an object of the present invention to provide an electricity storage device having a volumetric energy density much higher than that of conventional electricity storage devices.

### Solution to Problem

An aspect of the present invention relates to an electricity storage device including an electrode group obtained by stacking a plurality of positive electrode plates and a plurality of negative electrode plates with separators disposed therebetween, a case in which the electrode group is accommodated, and an external terminal disposed on the case and electrically connected to the electrode group. The case includes a first main wall and a second main wall that face each other, a first side wall and a second side wall through which the first main wall and the second main wall are coupled with each other at both sides of the first main wall and the second main wall, a top wall on which the external terminal is disposed, and a bottom wall. The electrode group is accommodated in the case while both end surfaces of the electrode group in a stacking direction of the positive electrode plates and the negative electrode plates face an inner surface of the first main wall and an inner surface of the second main wall. A plurality of positive electrode tabs disposed on the plurality of positive electrode plates at a position close to the first side wall and a plurality of negative electrode tabs disposed on the plurality of negative electrode plates at a position close to the second side wall protrude from an end surface of the electrode group in a direction toward the top wall. The top wall of the case has a recess depressed to a position between the positive electrode tabs and the negative electrode tabs. Advantageous Effects of Invention

According to the above aspect of the present invention, the volumetric energy density is considerably increased compared with the volumetric energy density of conventional electricity storage devices.

### Brief Description of Drawings

[Fig. 1A] Figure 1A is a perspective view conceptually illustrating an electricity storage device according to an embodiment of the present invention.
[Fig. 1B] Figure 1B is a top view conceptually illustrating the electricity storage device according to the embodiment of the present invention.
[Fig. 2] Figure 2 is an exploded perspective view of the electricity storage device.
[Fig. 3] Figure 3 is an exploded front view of the electricity storage device.
[Fig. 4] Figure 4 is a sectional view of the electricity storage device taken along line IV-IV in Fig. 3.
[Fig. 5] Figure 5 is an enlarged sectional view of a principal part taken along line V-V in Fig. 1B.
[Fig. 6] Figure 6 is a perspective view illustrating a module obtained by assembling a plurality of electricity storage devices.
[Fig. 7] Figure 7 is an exploded perspective view of an electricity storage device according to a first modification.
[Fig. 8] Figure 8 is an exploded perspective view of an electricity storage device according to a second modification.

### Reference Signs List

- 1: case
- 11: first main wall
- 12: second main wall
- 13: first side wall
- 14: second side wall
- 15: top wall
- 16: bottom wall
- 17: recess
- 171, 172: inner wall
- 173: through-hole
- 174: groove
- 18: first accommodating portion
- 19: second accommodating portion
- 2: electrode group
- 2a, 2b, 2c: end surface
- 21: positive electrode plate
- 22: negative electrode plate
- 23: separator
- 24: positive electrode tab
- 25: negative electrode tab
- 26: rivet
- 27: spacer
- 28: bag
- 3: positive electrode external terminal
- 31: rivet head portion
- 31a: protrusion
- 32: rivet leg portion
- 33, 34: ring gasket
- 35: riveted portion
- 4: negative electrode external terminal
- 5: positive electrode connecting member
- 51: first tabular portion
- 52: second tabular portion
- 52a: fitting hole
- 6: negative electrode connecting member
- 71: exterior can
- 71a: opening
- 72: lid member
- 73: exterior can
- 73a: opening
- 74: lid member
- 75, 76: case part
- 76a: opening
- 81: safety valve
- 82: stopper

### Description of Embodiments

An electricity storage device according to an embodiment of the present invention includes an electrode group obtained by stacking a plurality of positive electrode plates and a plurality of negative electrode plates with separators disposed therebetween, a case in which the electrode group is accommodated, and an external terminal disposed on the case and electrically connected to the electrode group. The case includes a first main wall and a second main wall that face each other, a first side wall and a second side wall through which the first main wall and the second main wall are coupled with each other at both sides of the first main wall and the second main wall, a top wall on which the external terminal is disposed, and a bottom wall. The electrode group is accommodated in the case while both end surfaces of the electrode group in a stacking direction of the positive electrode plates and the negative electrode plates face an inner surface of the first main wall and an inner surface of the second main wall. A plurality of positive electrode tabs disposed on the plurality of positive electrode plates at a position close to the first side wall and a plurality of negative electrode tabs disposed on the plurality of negative electrode plates at a position close to the second side wall protrude from an end surface of the electrode group in a direction toward the top wall. The top wall of the case has a recess depressed to a position between the positive electrode tabs and the negative electrode tabs.

In the above electricity storage device, the presence of the recess eliminates a useless space of the case in the rectangular electricity storage device. Thus, the occupation ratio of the electrode group in the electricity storage device is considerably increased. As a result, a volumetric energy density much higher than that of conventional electricity storage devices is achieved.

Herein, the terms "top" and "bottom" respectively used in "top wall" and "bottom wall" are used to clearly define the positional relationship between the walls constituting the case for the sake of convenience. Therefore, the terms "top" and "bottom" do not necessarily mean that the electricity storage device being operated is always disposed while the top wall of the electricity storage device faces vertically upward and the bottom wall faces vertically downward. The same applies hereafter.

In a specific preferred structure of the electricity storage device, the recess extends in the stacking direction between the positive electrode tabs and the negative electrode tabs and has openings to both the first main wall and the second main wall. In this structure, the occupation ratio of the electrode group is increased to 90% or more. Furthermore, in this structure, the occupation ratio of the electrode group can be increased to 93% or more.

In one example of the electricity storage device, the case includes a cylindrical exterior can having a closed bottom and a lid member that seals an opening of the exterior can. The exterior can constitutes the first main wall, the second main wall, the first side wall, the second side wall, and the bottom wall in the case. The lid member constitutes the top wall on which the recess is formed in the case.

In another example of the electricity storage device, the case includes a cylindrical exterior can having a closed bottom and a lid member that seals an opening of the exterior can. The exterior can constitutes the top wall on which the recess is formed, the second main wall, the first side wall, the second side wall, and the bottom wall in the case. The lid member constitutes the first main wall in the case.

In still another example of the electricity storage device, the case includes an upper case part and a lower case part joined to each other along a plane substantially parallel to the bottom wall. Herein, the term "substantially parallel" means "parallel" or "parallel ± 1 degree". The lower case part is a cylindrical exterior can having a closed bottom and including a portion to serve as the bottom wall in the case. The upper case part is a lid member that seals an opening of the lower case part and includes a portion to serve as the top wall in the case. In the upper case part, a first accommodating portion in which the positive electrode tabs are accommodated and a second accommodating portion in which the negative electrode tabs are accommodated are disposed on left and right sides of the recess formed in the portion to serve as the top wall.

In another specific preferred structure of the electricity storage device, the external terminal includes a positive electrode external terminal electrically connected to the positive electrode tabs and a negative electrode external terminal electrically connected to the negative electrode tabs. At least one of the positive electrode external terminal and the negative electrode external terminal is disposed on an inner wall of the recess. In this structure, the external terminal disposed on the inner wall of the recess is drawn in a direction from the first side wall toward the second side wall or a direction opposite to the direction. Therefore, the external terminal disposed on the inner wall of the recess has high strength to vibration of the electricity storage device in such a direction.

Next, the electricity storage device according to an embodiment will be specifically described in detail with reference to the attached drawings. Note that the structure of the electricity storage device described below is applicable to various electricity storage devices such as lithium ion capacitors and lithium ion batteries.

### [1] Structure of electricity storage device

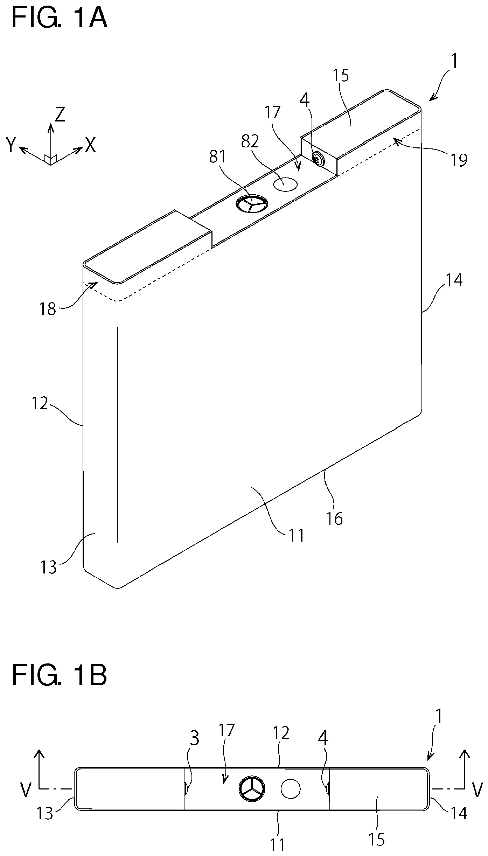

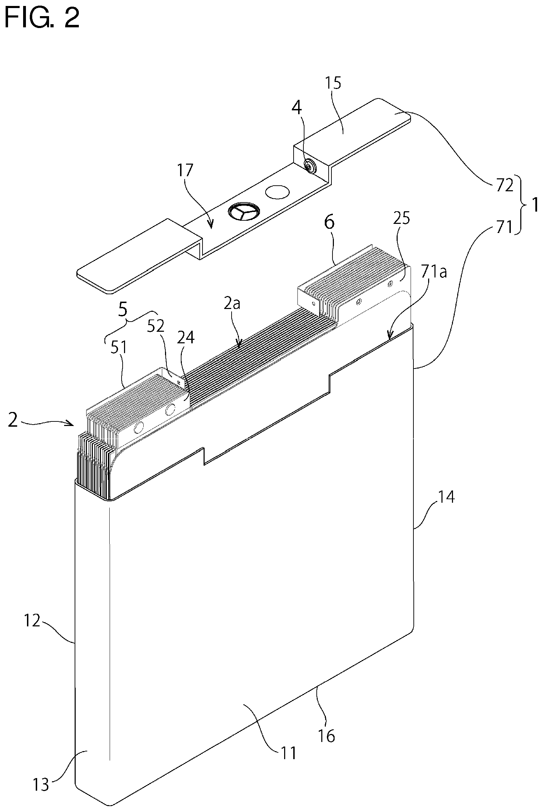

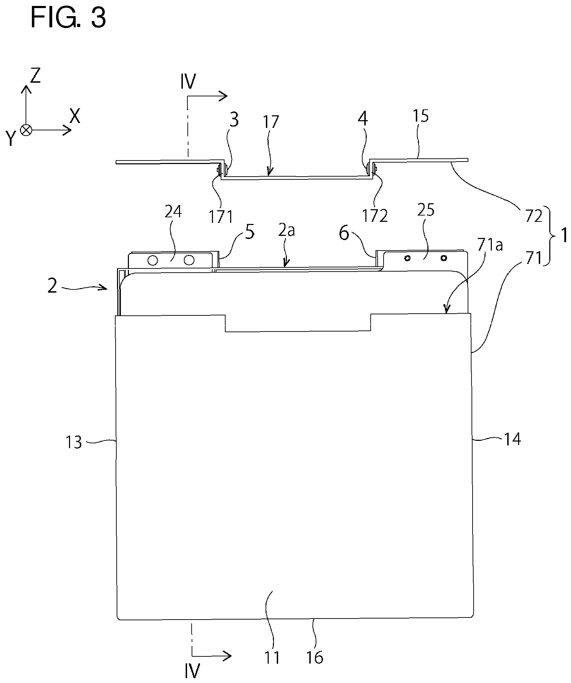

Figures 1A and 1B are respectively a perspective view and a top view conceptually illustrating an electricity storage device. Figures 2 and 3 are respectively an exploded perspective view and an exploded front view of the electricity storage device. As illustrated in these drawings, the electricity storage device includes a case 1, an electrode group 2, a positive electrode external terminal 3, a negative electrode external terminal 4, a positive electrode connecting member 5, and a negative electrode connecting member 6.

### [1-1] Case

The case 1 is a case in which the electrode group 2 and an electrolyte are accommodated and includes a first main wall 11 and a second main wall 12 that face each other, a first side wall 13 and a second side wall 14 through which the first main wall 11 and the second main wall 12 are coupled with each other at both sides of the first main wall 11 and the second main wall 12, a top wall 15, and a bottom wall 16. Hereafter, the direction from the first side wall 13 toward the second side wall 14 (the width direction of the electricity storage device) is defined as an X direction, the direction from the first main wall 11 toward the second main wall 12 (the thickness direction of the electricity storage device) is defined as a Y direction, and the direction from the bottom wall 16 toward the top wall 15 (the height direction of the electricity storage device) is defined as a Z direction. The case 1 is preferably made of a metal such as aluminum or an alloy such as stainless steel for the purpose of improving the corrosion resistance of the case 1.

A square groove-type recess 17 is formed on the top wall 15 of the case 1. The recess 17 extends in the Y direction and has openings to both the first main wall 11 and the second main wall 12. Therefore, the first main wall 11 and the second main wall 12 each have an angular U-shaped cut formed so as to open the recess 17. A first accommodating portion 18 and a second accommodating portion 19 are formed on the left and right sides of the recess 17. Positive electrode tabs 24 described below are accommodated in the first accommodating portion 18, and negative electrode tabs 25 described below are accommodated in the second accommodating portion 19. That is, in the assembled electricity storage device, the recess 17 has such a shape that the recess 17 is depressed to a position between the positive electrode tabs 24 and the negative electrode tabs 25. A safety valve 81 and a stopper 82 that closes an injection hole for the electrolyte are disposed on the bottom surface of the recess 17.

In this embodiment, as illustrated in Fig. 2, the case 1 includes a cylindrical exterior can 71 having a closed bottom and a lid member 72 that seals an opening 71a of the exterior can 71. The exterior can 71 constitutes the first main wall 11, the second main wall 12, the first side wall 13, the second side wall 14, and the bottom wall 16 in the case 1. The lid member 72 constitutes the top wall 15 on which the recess 17 is formed in the case 1. Figure 2 illustrates a state in which the electrode group 2 is slightly drawn from the opening 71a of the exterior can 71.

### [1-2] Electrode group

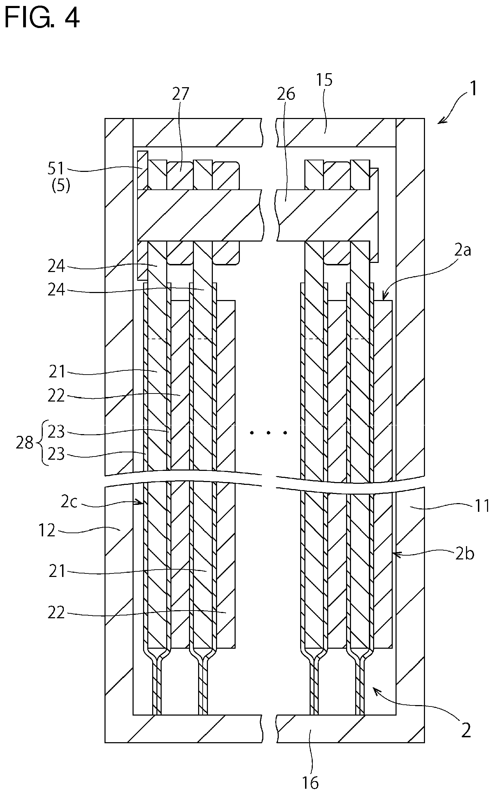

Figure 4 is a sectional view of the electricity storage device taken along line IV-IV in Fig. 3. As illustrated in Fig. 4, the electrode group 2 is formed by alternately stacking a plurality of positive electrode plates 21 and a plurality of negative electrode plates 22 with separators 23 disposed therebetween. Herein, each of the positive electrode plates 21 is accommodated in a bag 28 formed by two adjacent separators 23 that sandwich the positive electrode plate 21. Specifically, the bag 28 is formed by pressure-bonding the edges of the two separators 23.

In the assembled electricity storage device, the electrode group 2 is accommodated in the case 1 while both end surfaces 2b and 2c of the electrode group 2 in the stacking direction (Y direction) of the positive electrode plates 21 and the negative electrode plates 22 face the inner surface of the first main wall 11 and the inner surface of the second main wall 12, respectively. Furthermore, as illustrated in Fig. 2 and Fig. 3, in the assembled electricity storage device, a plurality of positive electrode tabs 24 disposed on the plurality of positive electrode plates 21 at a position close to the first side wall 13 and a plurality of negative electrode tabs 25 disposed on the plurality of negative electrode plates 22 at a position close to the second side wall 14 protrude from an end surface 2a of the electrode group 2 in a direction toward the top wall 15. This is specifically described below.

The positive electrode plates 21 and the negative electrode plates 22 each have a rectangular shape. Each of the positive electrode plates 21 has a positive electrode tab 24 disposed at a position close to one end (an end that will be located on the side of the first side wall 13) of one side of the assembled electricity storage device in a direction toward the top wall 15. Each of the negative electrode plates 22 has a negative electrode tab 25 at a position close to the other end (an end that will be located on the side of the second side wall 14) of the one side of the assembled electricity storage device in the direction toward the top wall 15. In the electrode group 2, the positive electrode plates 21 and the negative electrode plates 22 are alternately stacked so that the positive electrode tabs 24 face each other and the negative electrode tabs 25 face each other at a position away from the positive electrode tabs 24.

As illustrated in Fig. 4, all the positive electrode tabs 24 are fastened by a rivet 26. In this embodiment, a conductive spacer 27 is disposed between the two adjacent positive electrode tabs 24 to prevent the deformation of the positive electrode plates 21 and the positive electrode tabs 24. Such a structure is particularly preferred when a metal porous body such as Aluminum-Celmet (registered trademark), which is easily deformed by external forces, is used as the positive electrode plate 21. As in the case of the positive electrode tabs 24, all the negative electrode tabs 25 are also fastened by a rivet 26. A conductive spacer is disposed between the two adjacent negative electrode tabs 25 to prevent the deformation of the negative electrode plates 22 and the negative electrode tabs 25.

### [1-3] Positive electrode external terminal and Negative electrode external terminal

The positive electrode external terminal 3 is electrically connected to the positive electrode plates 21 through the positive electrode tabs 24. The negative electrode external terminal 4 is electrically connected to the negative electrode plates 22 through the negative electrode tabs 25. As illustrated in Fig. 3, the positive electrode external terminal 3 and the negative electrode external terminal 4 are disposed on the lid member 72 constituting the top wall 15 of the case 1. Specifically, the positive electrode external terminal 3 is disposed on an inner wall 171 of the recess 17, the inner wall 171 being located on the side of the first accommodating portion 18 (refer to Fig. 1A). The negative electrode external terminal 4 is disposed on an inner wall 172 of the recess 17, the inner wall 172 being located on the side of the second accommodating portion 19 (refer to Fig. 1A). That is, the positive electrode external terminal 3 is drawn in the X direction, and the negative electrode external terminal 4 is drawn in a direction opposite to the X direction.

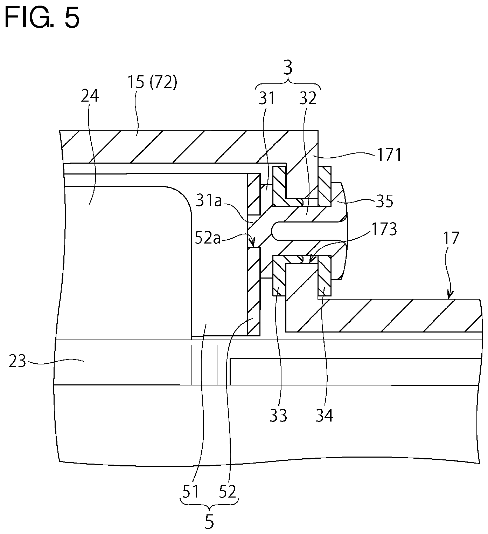

Figure 5 is an enlarged sectional view of a principal part taken along line V-V in Fig. 1B. Specifically, Fig. 5 is a sectional view illustrating the positive electrode external terminal 3 and its surrounding structure. As illustrated in Fig. 5, the positive electrode external terminal 3 is a rivet-type terminal and includes a rivet head portion 31 and a rivet leg portion 32. The rivet head portion 31 includes a protrusion 31a engaged with a fitting hole 52a of a positive electrode connecting member 5 described below. A through-hole 173 into which the rivet leg portion 32 of the positive electrode external terminal 3 is inserted and which prevents the rivet head portion 31 of the positive electrode external terminal 3 from passing through the through-hole 173 is formed in the inner wall 171 of the recess 17. The diameter of the through-hole 173 is designed to be larger than the diameter of the rivet leg portion 32. The positive electrode external terminal 3 is installed in the inner wall 171 of the recess 17 as follows. First, the rivet leg portion 32 is inserted into a ring gasket 33 made of a rubber material. Subsequently, the rivet leg portion 32 with the ring gasket 33 is inserted into the through-hole 173 while the rivet head portion 31 is positioned inside the case 1. Thus, the ring gasket 33 is interposed between the rivet head portion 31 and the inner wall 171. Then, a ring gasket 34 made of a resin material is attached to the rivet leg portion 32 so that the ring gasket 34 and the ring gasket 33 sandwich the inner wall 171. Herein, the rivet leg portion 32 passes through the ring gasket 34. Then, the tip of the rivet leg portion 32 is riveted to fix the positive electrode external terminal 3 to the inner wall 171. As a result of this riveting, the ring gaskets 33 and 34 are sandwiched between the rivet head portion 31 of the positive electrode external terminal 3 and the resulting riveted portion 35, which compresses the ring gasket 33 made of a rubber material. Consequently, a part of the ring gasket 33 enters a space between the inner surface of the through-hole 173 and the rivet leg portion 32. In such a manner, the positive electrode external terminal 3 is installed in the inner wall 171 while the positive electrode external terminal 3 and the lid member 72 are electrically insulated from each other by the ring gaskets 33 and 34.

The negative electrode external terminal 4 is also a rivet-type terminal like the positive electrode external terminal 3, and is installed in the inner wall 172 of the recess 17 by the same installation method as described above.

### [1-4] Positive electrode connecting member and Negative electrode connecting member

The positive electrode connecting member 5 is a member for electrically connecting the positive electrode tabs 24 and the positive electrode external terminal 3 to each other. Specifically, the positive electrode connecting member 5 is formed by bending a single metal plate into an L shape and includes a first tabular portion 51 and a second tabular portion 52. In the assembled electricity storage device, the positive electrode connecting member 5 is disposed so that the first tabular portion 51 faces the positive electrode tabs 24 as illustrated in Fig. 4 and the second tabular portion 52 faces the inner wall 171 of the recess 17 as illustrated in Fig. 5. As illustrated in Fig. 4, the first tabular portion 51 is fixed to the positive electrode tabs 24 with the rivet 26 used to fasten the positive electrode tabs 24.

The second tabular portion 52 has a fitting hole 52a. In the assembled electricity storage device, the protrusion 31a on the rivet head portion 31 of the positive electrode external terminal 3 is engaged with the fitting hole 52a. Thus, the second tabular portion 52 and the positive electrode external terminal 3 are connected to each other. Note that the shape of the positive electrode connecting member 5 is not limited to the shape in this embodiment. A positive electrode connecting member having a different shape may be used as long as the positive electrode tabs 24 and the positive electrode external terminal 3 can be electrically connected to each other.

The negative electrode connecting member 6 is a member for electrically connecting the negative electrode tabs 25 and the negative electrode external terminal 4 to each other. The shape of the negative electrode connecting member 6 and the connecting form between the negative electrode tabs 25 and the negative electrode external terminal 4 through the negative electrode connecting member 6 are the same as those of the positive electrode connecting member 5 described above.

In the electricity storage device according to this embodiment, the presence of the recess 17 eliminates a useless space of the case in the rectangular electricity storage device. Thus, the occupation ratio of the electrode group 2 in the electricity storage device is increased to 90% or more. Furthermore, the occupation ratio of the electrode group 2 in this electricity storage device can be increased to 93% or more. Therefore, a volumetric energy density much higher than that of conventional electricity storage devices is achieved.

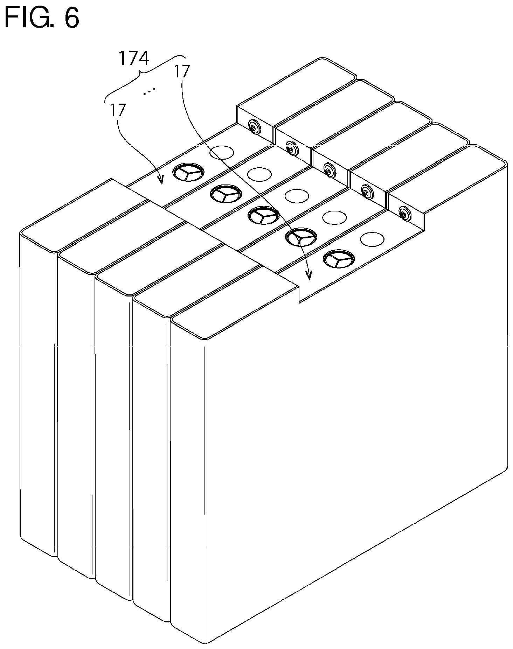

When a plurality of electricity storage devices according to this embodiment are placed on top of one another as illustrated in Fig. 6 to form a module, the recesses 17 formed in the electricity storage devices form a single long groove 174. By placing a cable such as a harness in this groove 174, the module and the cable are put together in a compact manner.

In the electricity storage device according to this embodiment, the positive electrode external terminal 3 is drawn in the X direction, and the negative electrode external terminal 4 is drawn in a direction opposite to the X direction (refer to Fig. 3). That is, the positive electrode external terminal 3 and the negative electrode external terminal 4 are drawn in the width direction of the electricity storage device. Therefore, in the electricity storage device according to this embodiment, the positive electrode external terminal 3 and the negative electrode external terminal 4 have high strength to vibration in the width direction of the electricity storage device.

### [2] Modifications

### [2-1] First modification

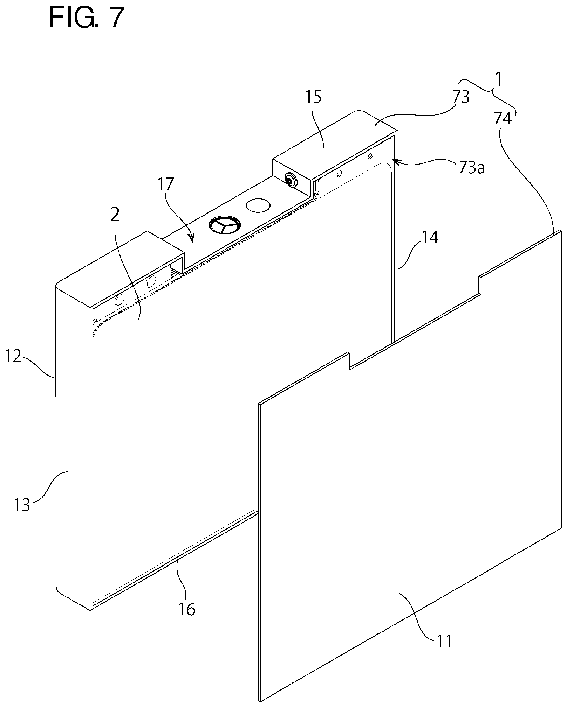

Figure 7 is an exploded perspective view illustrating an electricity storage device according to a first modification. Hereafter, the structure of the case 1 having a difference from the electricity storage device according to the above embodiment will be mainly described in detail.

In the first modification, as illustrated in Fig. 7, the case 1 includes a cylindrical exterior can 73 having a closed bottom and a lid member 74 that seals an opening 73a of the exterior can 73. The exterior can 73 constitutes the top wall 15 on which the recess 17 is formed, the second main wall 12, the first side wall 13, the second side wall 14, and the bottom wall 16 in the case 1. The lid member 74 constitutes the first main wall 11 in the case 1.

In the electricity storage device according to the first modification, the presence of the recess 17 eliminates a useless space of the case in the rectangular electricity storage device like the electricity storage device according to the above embodiment. Thus, the occupation ratio of the electrode group 2 in the electricity storage device is increased to 90% or more. Furthermore, the occupation ratio of the electrode group 2 in this electricity storage device can be increased to 93% or more. Therefore, a volumetric energy density much higher than that of conventional electricity storage devices is achieved.

### [2-2] Second modification

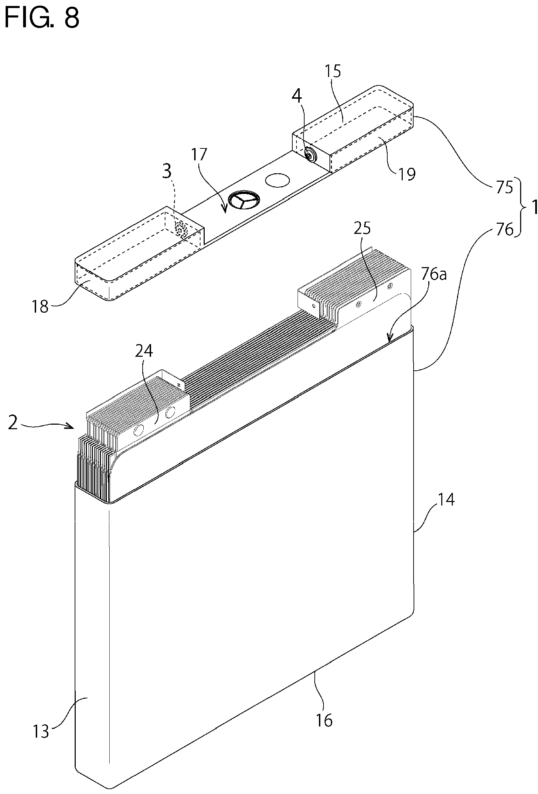

Figure 8 is an exploded perspective view illustrating an electricity storage device according to a second modification. Hereafter, the structure of the case 1 having a difference from the electricity storage device according to the above embodiment will be mainly described in detail.

In the second modification, as illustrated in Fig. 8, the case 1 includes an upper case part 75 and a lower case part 76 joined to each other along a plane substantially parallel to the bottom wall 16. Herein, the term "substantially parallel" means "parallel" or "parallel ± 1 degree". The lower case part 76 is a cylindrical exterior can having a closed bottom and including a portion to serve as the bottom wall 16 in the case 1. The upper case part 75 is a lid member that seals an opening 76a of the lower case part 76 and includes a portion to serve as the top wall 15 in the case 1. In the upper case part 76, the first accommodating portion 18 in which the positive electrode tabs 24 are accommodated and the second accommodating portion 19 in which the negative electrode tabs 25 are accommodated are disposed on the left and right sides of the recess 17 formed in the portion to serve as the top wall 15. Figure 8 illustrates a state in which the electrode group 2 is slightly drawn from the opening 76a of the lower case part 76.

In the electricity storage device according to the second modification, the presence of the recess 17 eliminates a useless space of the case in the rectangular electricity storage device like the electricity storage device according to the above embodiment. Thus, the occupation ratio of the electrode group 2 in the electricity storage device is increased to 90% or more. Furthermore, the occupation ratio of the electrode group 2 in this electricity storage device can be increased to 93% or more. Therefore, a volumetric energy density much higher than that of conventional electricity storage devices is achieved.

The structures of the individual parts in the present invention are not limited to those in the embodiment and modifications described above, and various changes can be made within the technical scope of the claims. For example, in the above electricity storage device, at least one of the positive electrode external terminal 3 and the negative electrode external terminal 4 may be disposed at a position other than the inner wall of the recess 17 on the top wall 15 of the case 1.

### Industrial Applicability

The electricity storage device according to the present invention is useful as, for example, large-scale power storage apparatuses for household use or industrial use.

## Claims

1. An electricity storage device comprising:
an electrode group obtained by stacking a plurality of positive electrode plates and a plurality of negative electrode plates with separators disposed therebetween;
a case in which the electrode group is accommodated; and
an external terminal disposed on the case and electrically connected to the electrode group,
wherein the case includes a first main wall and a second main wall that face each other, a first side wall and a second side wall through which the first main wall and the second main wall are coupled with each other at both sides of the first main wall and the second main wall, a top wall on which the external terminal is disposed, and a bottom wall,
the electrode group is accommodated in the case while both end surfaces of the electrode group in a stacking direction of the positive electrode plates and the negative electrode plates face an inner surface of the first main wall and an inner surface of the second main wall,
a plurality of positive electrode tabs disposed on the plurality of positive electrode plates at a position close to the first side wall and a plurality of negative electrode tabs disposed on the plurality of negative electrode plates at a position close to the second side wall protrude from an end surface of the electrode group in a direction toward the top wall,
and
the top wall of the case has a recess depressed to a position between the positive electrode tabs and the negative electrode tabs.

2. The electricity storage device according to Claim 1, wherein the recess extends in the stacking direction between the positive electrode tabs and the negative electrode tabs and has openings to both the first main wall and the second main wall.

3. The electricity storage device according to Claim 1 or 2, wherein the electrode group has an occupation ratio of 90% or more.

4. The electricity storage device according to any one of Claims 1 to 3,
wherein the case includes a cylindrical exterior can having a closed bottom and a lid member that seals an opening of the exterior can,
the exterior can constitutes the first main wall, the second main wall, the first side wall, the second side wall, and the bottom wall in the case, and
the lid member constitutes the top wall on which the recess is formed in the case.

5. The electricity storage device according to any one of Claims 1 to 3,
wherein the case includes a cylindrical exterior can having a closed bottom and a lid member that seals an opening of the exterior can,
the exterior can constitutes the top wall on which the recess is formed, the second main wall, the first side wall, the second side wall, and the bottom wall in the case, and
the lid member constitutes the first main wall in the case.

6. The electricity storage device according to any one of Claims 1 to 3,
wherein the case includes an upper case part and a lower case part joined to each other along a plane substantially parallel to the bottom wall,
the lower case part is a cylindrical exterior can having a closed bottom and including a portion to serve as the bottom wall in the case,
the upper case part is a lid member that seals an opening of the lower case part and includes a portion to serve as the top wall in the case, and
in the upper case part, a first accommodating portion in which the positive electrode tabs are accommodated and a second accommodating portion in which the negative electrode tabs are accommodated are disposed on left and right sides of the recess formed in the portion to serve as the top wall.

7. The electricity storage device according to any one of Claims 1 to 6,
wherein the external terminal includes:
a positive electrode external terminal electrically connected to the positive electrode tabs; and
a negative electrode external terminal electrically connected to the negative electrode tabs, and
wherein at least one of the positive electrode external terminal and the negative electrode external terminal is disposed on an inner wall of the recess.
